# EUROPEAN PATENT SPECIFICATION

(11) **EP 3 294 058 B1**
(45) Date of publication and mention of the grant of the patent: **24.12.2025**
(21) Application number: 16723622.3
(22) Date of filing: 09.05.2016
(51) Int. Cl.: A01N 25/02, A01N 25/04, A01N 25/30, A01N 43/40, A01P 13/00

(54) **AGROCHEMICAL EMULSIONS**
AGROCHEMISCHE EMULSIONEN
ÉMULSIONS AGROCHIMIQUES

(30) Priority: 12.05.2015 US 201562160305 P
(43) Date of publication of application: 21.03.2018
(73) Proprietor: Croda, Inc., Plainsboro, NJ 08536 (US)
(72) Inventor: LINDNER, Gregory, James, Wilmington, DE 19808 (US); SECREST, Matthew, Eric, Cary, NC 27519 (US)
(74) Representative: Karfopoulos, Alexis Theo
(86) International application number: PCT/US2016/031438
(87) International publication number: WO 2016/182991

(56) References cited:
- WO-A1-2011/116049
- WO-A2-2009/032481

## Description

This application is related to, and claims the benefit or priority of, U.S. Provisional Application No. 62/160,305, entitled AGROCHEMICAL EMULSIONS, filed on 12 May 2015, the contents of which are incorporated herein by reference in their entirety for all purposes.

The present invention relates to agrochemical emulsion-type concentrates and diluted concentrate formulations. In particular oil-in-water emulsions for comprising one or more agrochemical actives. The present invention also includes methods of treating crops with such formulations.

Emulsion-type concentrates are a particularly important method of storing and delivering agrochemical actives for use in the agricultural industry. Once of the most important factors when creating any emulsion is stability, both in relation to chemical and physical stability of the emulsion at the time it is formed, during the period when it is transported and stored prior to use potentially being exposed to varying ambient temperatures, and on dilution and use. Failure to provide an emulsion having the desired stability would not meet the market need.

There are many causes of emulsion formulation instabilities, such as a) chemical instabilities due to reactions between ingredients (actives and/or inerts, etc.), photo-degradations, and oxidations, etc., b) physical instabilities due to phase separations (Oswald ripening, crystallization, sedimentations, creamings, etc.) and c) environmental factors (temperature, humidity/moisture, etc.). Therefore, it is important to design a surfactant system for use in the emulsion which can reduce any such destabilising effects, and allow for effective delivery of agrochemical actives.

Oil-in-water emulsions are one of the most common formulation types for many agricultural products, where droplets of oil are stabilised by surfactant emulsifiers as a discrete phase, and dispersed in a continuous water continuous phase. In particular, concentrated aqueous emulsions (EW) are a dispersion of water insoluble liquid in water, where the organic liquid can be or comprise a liquid active, or comprise a dissolved solid active. Concentrated aqueous emulsions are considered environmentally friendly alternatives to more traditional emulsifiable concentrates and offer the benefit of replacing much of the organic solvents with water. The choice and amount of surfactants included in the emulsion is critical to ensuring a stable emulsion.

Document WO 2011/116049 discloses the use of an alkoxylated polyols derived from star shaped polymers as a surfactant/emulsifier in emulsions, including oil-in-water emulsions. The compounds are particularly suitable for use as emulsifiers and/or dispersants.

It is important that the oil phase in the emulsion remains dispersed in the concentrate formulation without significant separation over an extended period of time under typical storage conditions. It is also important to prevent the active present in the dispersed oil phase in the concentrate from settling or forming hard pack sediment upon storage.

Therefore, there is a need for surfactants for agrochemical applications which are able to stabilise concentrate oil-in-water emulsions.

Additionally, there is a need for surfactants which are able to keep oil particles dispersed in the emulsion, and which are able to maintain active ingredients in dispersion for a period of time to allow for storage without breakdown of the dispersion.

The present invention also seeks to provide the use of surfactants in agrochemical concentrate emulsion compositions in combination with an agrochemical active, and also seeks to provide the use of agrochemical concentrates and dilute formulations thereof comprising said surfactants.

According to a first aspect of the present invention there is provided agrochemical oil-in-water emulsion concentrate comprising;
i) a discrete oil phase comprising at least one agrochemical oil soluble active;
ii) a continuous water phase, optionally comprising at least one agrochemical water soluble active;
iii) a surfactant emulsifier being an alkoxylated polyol which is optionally acyl terminated, and having a general structure (I):

   R¹. [(AO)ₙ-R²]ₘ (I)

   wherein
   R¹ is the residue of a monosaccharide selected from glucose, fructose or sorbitol, a disaccharide such as maltose, palitose, lactitol or lactose, or a higher oligosaccharide, each having m active hydrogen atoms, where m is an integer in the range from 4 to 10;
   AO is an oxyalkylene group;
   each n independently represents an integer in the range from 1 to 100;
   each R² is independently represents hydrogen, or an acyl group represented by - C(O)R³ wherein each R³ independently represents a residue of polyhydroxyalkyl carboxylic acid, polyhydroxyalkenyl carboxylic acid, hydroxyalkyl carboxylic acid, hydroxyalkenyl carboxylic acid, oligomer of hydroxyalkyl carboxylic acid, or oligomer of hydroxyalkenyl carboxylic acid; and
   wherein on average at least two R² groups per molecule are alkanoyl groups as defined; and
iv) a HLB co-surfactant having a HLB greater than 10 and comprises a polyalkylene glycol ether;
wherein said oil soluble active is selected from spinosad, spinetoram, imidacloprid, propanil, cyproconazole, Diflufenican, acetamiprid, amicarbazone, amidosulfuron, asulam, bentazone, carbaryl, cymoxanil, dicamba, florasulam, myclobutanil, nitrapyrin, picloram, propiconazole, prosulfuron, prothioconazole, pymetrozine, sulfosulfuron, triclopyr, tricyclazole, malathion, and diflufenzopyr.

According to a second aspect of the present invention there is provided a method of preparing an emulsion concentrate according to the first aspect, said method comprising mixing;
oil comprising at least one agrochemical oil soluble active;
water comprising optionally at least one agrochemical water soluble active;
a surfactant emulsifier being an alkoxylated polyol which is
optionally acyl terminated, and having a general structure (I):

R¹. [(AO)ₙ-R²]ₘ (I)

wherein
R¹ is the residue of a monosaccharide selected from glucose, fructose or sorbitol, a disaccharide such as maltose, palitose, lactitol or lactose, or a higher oligosaccharide, each having m active hydrogen atoms, where m is an integer in the range from 4 to 10;
AO is an oxyalkylene group;
each n independently represents an integer in the range from 1 to 100;
each R² is independently represents hydrogen, or an acyl group represented by - C(O)R³ wherein each R³ independently represents a residue of polyhydroxyalkyl carboxylic acid, polyhydroxyalkenyl carboxylic acid, hydroxyalkyl carboxylic acid, hydroxyalkenyl carboxylic acid, oligomer of hydroxyalkyl carboxylic acid, or oligomer of hydroxyalkenyl carboxylic acid; and
wherein on average at least two R² groups per molecule are alkanoyl groups as defined; and
a HLB co-surfactant having a HLB greater than 10 and comprises a polyalkylene glycol ether;
wherein said oil soluble active is selected from spinosad, spinetoram, imidacloprid, propanil, cyproconazole, Diflufenican, acetamiprid, amicarbazone, amidosulfuron, asulam, bentazone, carbaryl, cymoxanil, dicamba, florasulam, myclobutanil, nitrapyrin, picloram, propiconazole, prosulfuron, prothioconazole, pymetrozine, sulfosulfuron, triclopyr, tricyclazole, malathion, and diflufenzopyr.

According to a third aspect of the present invention there is provided an agrochemical formulation formed by dilution of the agrochemical oil-in-water emulsion concentrate according to the first aspect or as formed by the second aspect.

According to a fourth aspect of the present invention there is provided a method of treating vegetation to control pests, the method comprising applying an agrochemical formulation of the third aspect, either to said vegetation or to the immediate environment of said vegetation.

It has been found that use of an optionally acyl terminated alkoxylated polyol or polyamine as an surfactant emulsifier for oil-in-water agrochemical emulsion concentrates provides for stable emulsion concentrates over time and under varying storage temperatures.

As used herein, the terms 'for example,' 'for instance,' 'such as,' or 'including' are meant to introduce examples that further clarify more general subject matter. Unless otherwise specified, these examples are provided only as an aid for understanding the applications illustrated in the present disclosure, and are not meant to be limiting in any fashion.

It will be understood that, when describing the number of carbon atoms in a substituent group (e.g. 'C₁ to C₆ alkyl'), the number refers to the total number of carbon atoms present in the substituent group, including any present in any branch groups. Additionally, when describing the number of carbon atoms in, for example fatty acids, this refers to the total number of carbon atoms including the one at the carboxylic acid, and any present in any branch groups.

As used herein, the term 'concentrate' is well known in the agrochemical field, and refers to agrochemical compositions, which are designed to be diluted with water (or a water based liquid) to form the corresponding end-use agrochemical formulations, typically spray formulations. The concentrate is therefore formed and stored in a concentrated form, and diluted down to the desired strength prior to application.

The surfactant emulsifier is an alkoxylated polyol which is optionally acyl terminated, and having a general structure (I):

R¹. [(AO)ₙ-R²]ₘ (I)

wherein
R¹ is the residue of a monosaccharide selected from glucose, fructose or sorbitol, a disaccharide such as maltose, palitose, lactitol or lactose, or a higher oligosaccharide, each having m active hydrogen atoms, where m is an integer in the range from 4 to 10;
AO is an oxyalkylene group;
each n independently represents an integer in the range from 1 to 100;
each R² is independently represents hydrogen, or an acyl group represented by - C(O)R³ wherein each R³ independently represents a residue of polyhydroxyalkyl carboxylic acid, polyhydroxyalkenyl carboxylic acid, hydroxyalkyl carboxylic acid, hydroxyalkenyl carboxylic acid, oligomer of hydroxyalkyl carboxylic acid, or oligomer of hydroxyalkenyl carboxylic acid; and
wherein on average at least two R² groups per molecule are alkanoyl groups as defined.

The surfactant emulsifiers of the present invention are at least notionally built up from the group R¹ that can be considered as the "core group" of the compounds. This core group is the residue (after removal of m active hydrogen atoms) of a compound containing at least m active hydrogen atoms present in hydroxyl groups only.

The term polyol is well known in the art, and refers to an alcohol comprising more than one hydroxyl group. The term 'active hydrogen' refers to the hydrogen atoms present as part of the hydroxyl groups of the polyol. Therefore, it will be understood that the integer m, being the number of active hydrogens in said polyol, is equivalent to the number of hydroxyl groups present for each polyol.

The term 'polyol residue' as used herein, unless otherwise defined, refers to an organic radical derived from a polyol by removal of m active hydrogen atoms, each hydrogen atom being from one of the hydroxyl groups present.

The R¹ group is the residue of, or a residue derived from a monosaccharide such as glucose, fructose or sorbitol, a disaccharide such as maltose, palitose, lactitol or lactose or a higher oligosaccharide. R¹ is preferably the residue of a monosaccharide, more preferably of glucose, fructose or sorbitol, and particularly of sorbitol.

The open chain form of R¹ groups is preferred; however groups including internal cyclic ether functionality can be used, and may be obtained inadvertently if the synthetic route exposes the group to relatively high temperatures or other conditions, which promote such cyclisation.

The index m is a measure of the functionality of the R¹ core group and the alkoxylation reactions will replace some or all of the active hydrogen atoms (dependant on the molar ratio of core group to alkoxylation group) in the molecule from which the core group is derived. Reaction at a particular site may be restricted or prevented by steric hindrance or suitable protection. The terminating hydroxyl groups of the polyalkylene oxide chains in the resulting compounds are then available for reaction with the above defined acyl compounds.

The index m will be in the range from 4 to 10, particularly 5 to 8, and especially 5 to 6. Mixtures may be, and normally are, employed, and therefore m when specified across a bulk amount of the emulsifier, can be an average value and may be non-integral.

The groups R² are the "terminating groups" of the (poly)alkylene oxide chains. The terminating groups are hydrogen or an acyl (also known as alkanoyl) group represented by -C(O)R³, where each R³ independently represents a residue of polyhydroxyalkyl carboxylic acid, polyhydroxyalkenyl carboxylic acid, hydroxyalkyl carboxylic acid, hydroxyalkenyl carboxylic acid, oligomer of hydroxyalkyl carboxylic acid, or oligomer of hydroxyalkenyl carboxylic acid

The hydroxylalkyl and hydroxyalkenyl carboxylic acids are of formula HO-X-COOH where X is a divalent saturated or unsaturated, preferably saturated, aliphatic radical containing at least 8 carbon atoms and no more than 20 carbon atoms, typically from 11 to 17 carbons and in which there are at least 4 carbon atoms directly between the hydroxyl and carboxylic acid groups.

Desirably the hydroxyalkyl carboxylic acid is 12-hydroxystearic acid. In practice such hydroxyalkyl carboxylic acids are commercially available as mixtures of the hydroxyl acid and the corresponding unsubstituted fatty acid. For example 12-hydroxystearic acid is typically manufactured by hydrogenation of castor oil fatty acids including the C₁₈ unsaturated hydroxyl acid and the non-substituted fatty acids (oleic and linoleic acids) which on hydrogenation gives a mixture of 12-hydroxystearic and stearic acids. Commercially available 12-hydroxystearic acid typically contains about 5 to 8% unsubstituted stearic acid.

The polyhydroxyalkyl or polyhydroxyalkenyl carboxylic acid is manufactured by polymerising the above mentioned hydroxyalkyl or hydroxyalkenyl carboxylic acid. The presence of the corresponding unsubstituted fatty acid acts as a terminating agent and therefore limits the chain length of the polymer. Desirably the number of hydroxyalkyl or hydroxyalkenyl units is on average from 2 to 10, particularly from about 4 to 8 and especially about 7. The molecular weight of the polyacid is typically from 600 to 3,000, particularly from 900 to 2,700, more particularly from 1,500 to 2,400 and especially about 2,100.

The residual acid value for the polyhydroxyalkyl or polyhydroxyalkenyl carboxylic acid typically is less than 50 mgKOH/g, and a preferable range is 30 to 35 mgKOH/g. Typically, the hydroxyl value for the polyhydroxyalkyl or polyhydroxyalkenyl carboxylic acid is a maximum of 40 mgKOH/g, and a preferable range is 20 to 30 mgKOH/g.

The oligomer of the hydroxyalkyl or hydroxyalkenyl carboxylic acid differs from the polymer in that termination is not by the unsubstituted corresponding fatty acid. Desirably it is a dimer of the hydroxylalkyl or hydroxyalkenyl carboxylic acid.

The oxyalkylene groups (AO) may be selected from groups of the formula -(C_{y}H_{2y}O)-where y is an integer selected from 2, 3, or 4. Preferably, y is 2 or 3.

The oxyalkylene group AO may be selected from oxyethylene, oxypropylene, oxybutylene, or oxytetramethylene. Preferably, the oxyalkylene group is selected from oxyethylene (EO) and/or oxypropylene (PO).

Where the oxyalkylene chain is homopolymeric, homopolymers of ethylene oxide or propylene oxide are preferred. More preferably, homopolymers of ethylene oxide are particularly preferred.

Where there is more than one oxyalkylene group present (i.e. where n is 2 or more) and at least two are part of the same oxyalkylene chain, the oxyalkylene groups may be the same or may be different along said oxyalkylene chain. In this embodiment, the oxyalkylene chain may be a block or random copolymer of differing oxyalkylene groups.

Usually, where co-polymeric chains of ethylene and propylene oxide units are used the molar proportion of ethylene oxide units used will be at least 50% and more usually at least 70%.

The number of alkylene oxide residues in the (poly)alkylene oxide chains, i.e. the value of the each parameter n, will preferably be in the range from 2 to 50, more preferably 3 to 20, and particularly 5 to 10.

The total number of alkylene oxide residues in general structure (I) (i.e. n x m) is preferably in the range from 10 to 300, more preferably 20 to 100, particularly 25 to 70, and especially 30 to 50.

Where the number of acyl residues in the molecule is significantly less than m, the distribution of such groups may depend on the nature of the core group and on the extent and effect of the alkoxylation of the core group. Thus, where the core group is derived from pentaerythritol, alkoxylation of the core residue may be evenly distributed over the four available sites from which an active hydrogen can be removed and on esterification of the terminal hydroxyl functions the distribution of acyl groups will be close to the expected random distribution. However, where the core group is derived from compounds, such as sorbitol, where the active hydrogen atoms are not equivalent, alkoxylation will typically give unequal chain lengths for the polyalkyleneoxy chains. This may result in some chains being so short that the other (longer) chains exert significant steric effects making esterification at the "short chain" terminal hydroxyl groups relatively difficult. Esterification then will generally preferentially take place at the "long chain" terminal hydroxyl groups.

The surfactant emulsifier of the invention can be made by firstly alkoxylating R¹ core groups containing m active hydrogen atoms, by techniques well known in the art, for example by reacting with the required amounts of alkylene oxide, for example ethylene oxide and/or propylene oxide. Some suitable alkoxylated products are commercially available, for example sorbitol 30 ethoxylate (Atlas^{™} G-2330), sorbitol 40 ethoxylate (Atlas^{™} G-2004), and sorbitol 50 ethoxylate (Atlas^{™} G-2005). All are available ex Croda. Other alkoxylation products include sorbitol 12 ethoxylate and sorbitol 100 ethoxylate.

The second stage of the process preferably comprises reacting the aforementioned alkoxylated species with a polyhydroxyalkyl (alkenyl) carboxylic acid and/or a hydroxyalkyl(alkenyl) carboxylic acid under standard catalysed esterification conditions at temperatures up to 250°C.

The molar ratio of alkoxylated product to a polyhydroxyalkyl (alkenyl) carboxylic acid and/or a hydroxyalkyl(alkenyl) carboxylic acid preferably ranges from 1:2 to 1:40.

The surfactant emulsifier is a liquid with a molecular weight ranging from 3,000 to 8,000. The emulsifier is preferably a star block copolymer.

One of the key benefits of the emulsifier is that it can have a wide range of HLB depending on whether the R³ group is a residue of a polyhydroxyalkylcarboxylic acid, a hydroxyl alkylcarboxylic acid, an oligomer of a hydroxyalkyl carboxylic acid, or a mixture thereof and also depending on the ratio of each of these ingredients. The typical range of HLB is from 1.3 to 15.0.

In one preferred embodiment of the invention the emulsifier is prepared by reaction of the alkoxylated core group R¹ with a hydroxyl alkylcarboxylic acid in a molar ratio of from 1:14 to 1:19. Preferably the emulsifier prepared by this route has an HLB of between 6 and 9 and a molecular weight between 6,500 and 8,000.

In a further preferred embodiment of the invention the emulsifier is prepared by reaction of the alkoxylated core group R¹ with a mixture of a polyhydroxyalkyl carboxylic acid and a hydroxyl alkylcarboxylic acid where the molar ratio of alkoxylated core group to mixture of acids. Preferably the molar ratio of alkoxylated core group to mixture of acids ranges from 1:1 to 1:6. Preferably the emulsifier prepared by this route has a molecular weight between 3,000 and 4,000.

In a further preferred embodiment of the invention the emulsifier is prepared by reaction of the alkoxylated core group R¹ with a polyhydroxyalkyl carboxylic acid where the molar ratio of alkoxylated core group to acid preferably ranges from 1:14 to 1:19. Preferably the emulsifier prepared by this route has a molecular weight between 6,500 and 8,000.

Preferably, the amount of surfactant emulsifier comprised in the emulsion concentrate is in the range from 0.5 wt.% to 15 wt.% as a percentage of the total emulsion concentrate weight. More preferably, from 1.5 wt.% to 10 wt.%. Most preferably, 2.0 wt.% to 5.0 wt.%. Further preferably, 3.0 wt.% to 4.0 wt.%.

The emulsion concentrate comprises a HLB co-surfactant having a HLB greater than 10, preferably greater than 12, more preferably greater than 13, and most preferably greater than 14. The high HLB co-surfactant may also have a cloud point at 1% in aqueous solution is in excess of 50°C.

Suitable high HLB co-surfactants may be selected from non-ionic polymeric surfactants, anionic surfactants, amphoteric graft copolymers of polymerised fatty acids, and amphoteric surfactants.

Suitable non-ionic polymeric surfactants may have number-average molecular weight (NAMW) greater than 500 daltons and be selected from:
▪ Ethylene-propylene oxide copolymers of mono-, di-, tri-, and polyhydroxy initiators of random structuring, normal or reverse blocking, and including diblock, triblock, star structures - examples include Synperonic PE/P85, PE/F127, PE/P105, Synperonic T series, Emkarox HV series, Emkarox VG132W, Atlas G-5000, and Atlas G-5002L.
▪ Alkoxylated fatty alcohols where carbon chain length preferably is at least 8 (branched or linear, saturated or unsaturated), more preferably between 12 and 22, and most preferably between 12 and 18 - examples include Brij L23, Synperonic A20, Brij O20, Brij IC20, Brij S20, and Procetyl AWS.
▪ Alkoxylated fatty acids where carbon chain length preferably greater than 8 (branched or linear, saturated or unsaturated), more preferably between 12 and 22, and most preferably between 12 and 18 - examples include Myrj S40, Cithrol, and Myrj S100.
▪ Alkoxylated fatty alkylamines where carbon chain length preferably is greater than 8 (branched or linear, saturated or unsaturated), more preferably between 12 and 22, and most preferably between 12 and 18 - examples include Atlas G-3780A.
▪ Alkoxylated styrenated phenols - examples include Sopraphor BSU.

Suitable anionic (phosphate and sulphate) derivatives of the above may have a NAMW > 500 daltons and be selected from:
▪ Alkoxylated fatty alcohol sulphates where carbon chain length preferably is at least 8 (branched or linear, saturated or unsaturated), more preferably between 12 and 22, and most preferably between 12 and 18 - examples include Steol CA-360, and Steol CS-460.
▪ Alkoxylated fatty alcohol phosphates where carbon chain length preferably is at least 8 (branched or linear, saturated or unsaturated), more preferably between 8 and 22, and most preferably between 12 and 18 - examples include Multitrope 1214, Crodafos D4A, Crodafos T6A, Crodafos O10A, Crodafos SG, and Crodafos CS2A.
▪ Alkoxylated alkylphenol phosphates - examples include Atphos 3204, Atphos 3205, and Atphos 3206.
▪ Alkoxylated styrenated phenols - examples include Sopraphor 3D33 and Sopraphor FLK.

Amphoteric graft copolymers of polymerised fatty acids may be used. Suitable amphoteric graft copolymers of polymerised fatty acids and variations thereof may comprise one or more grafted alkylene oxide chains terminated with tertiary amine functional groups per mole of polymerised fatty acid with total average polymerised fatty acid cross-linked carbon chain length preferably between 32 and 66, more preferably between 34 and 58, and most preferably between 36 and 54.

Suitable amphoteric surfactants may include alkyliminodipropionates, for example Crodateric LIDP.

Anionic surfactants may be used, and may include alkylbenzenesulphonates, alkanoyl taurates, and alkanoyl sarcosinates - for example Zephrym SD1121, Adinol OT-72, and Crodasinic LS-30

Other suitable high HLB surfactants may include polyoxyethylene fatty acid esters such as Myrj s50 and s100, alcohol ethoxylates such as Synperonic 13/12 and 91/10, and ethoxylated fatty alcohols such as Brij S100/L23/O20/C20.

Preferably, the HLB co-surfactant is selected from non-ionic polymeric surfactants, with number-average molecular weight (NAMW) greater than 500 daltons, and being ethylene-propylene oxide copolymers of mono-, di-, tri-, and polyhydroxy initiators of random structuring, normal or reverse blocking, and including diblock, triblock, star structures.

More preferably, the high HLB co-surfactant is comprised of a polyalkylene glycol ether. A preferred example of such a polymeric surfactant is the commercial surfactant AtlasG-5000 (EO-PO block copolymer). Another example of such a polymeric surfactant is the commercial surfactant Termul5429 (alcohol alkoxylate).

Preferably, the amount of high HLB co-surfactant comprised in the emulsion concentrate is in the range from 0.5 wt.% to 15 wt.% as a percentage of the total concentrate emulsion weight. More preferably, from 1.5 wt.% to 10 wt.%. Most preferably, 2.0 wt.% to 5.0 wt.%. Further preferably, 3.0 wt.% to 4.0 wt.%.

The surfactant emulsifier of the present invention will typically be used in an amount proportional to the amount of high HLB co-surfactant in the concentrate. The ratio of surfactant emulsifier to high HLB co-surfactant in the concentrate is preferably at a weight ratio of from about 1:0.1 to about 1:10. More preferably, from about 1:0.5 to about 1:2. Most preferably, from about 1:08 to about 1:1.2.

The emulsion concentrate comprises water which forms a continuous phase of said emulsion. Typically, the emulsion concentrate of the present invention comprises water in the range from 10 wt.% to 80 wt.% as a percentage of the total emulsion concentrate weight. Preferably, 20 wt.% to 70 wt.%. More preferably, 30 wt.% to 60 wt.%, most preferably, in the range from 40 wt.% to 50 wt.%.

The term 'oil' is used for such carrier fluids as a convenient term. Generally oil dispersion formulations are made so that they emulsify readily on dilution with water, desirably with just the agitation required to dilute the formulation.

The oil of the concentrate will be understood to preferably form the continuous phase of the concentrate. The oil is preferably a liquid at room temperature and pressure.

Suitable oils for use in the oil-in-water emulsion according to the present invention include any agrochemical oils. The oil may act as a solvent, diluent, or also have adjuvancy properties.

A wide range of oils (carrier fluids) can be structured using the compounds of the invention and the best such compounds will provide structuring in a wide range of oils (rather than a relatively narrow range for each structuring compound). The range of oil polarity for which structuring can be provided is wide ranging from non-polar oils such as paraffinic oils to alkoxylate oils. One way of expressing this range of polarity is to use a numeric solubility parameter. It has been found that Hansen and Beerbower solubility δ^{t} parameter combining dispersive (van der Waals), polar (Coulombic) and hydrogen bonding component (see the CRC Handbook of Solubility Parameters and Other Cohesion Parameters p85 to 87) provide good correspondence with the polarity as reflected in the performance of the oils that we have investigated.

The numerical values of solubility parameter given below are Hansen and Beerbower δ^{t} values abbreviated as "HBSP" values. Generally surfactant emulsifiers of and used in this invention can provide structure in oils with HBSP values ranging from 12 (very non-polar) to 22 (highly polar), particularly from 14 to 20.

Typical oils that can be structured using compounds of the invention include:
liquid and low-melting temperature alcohols including relatively short chain alkanols such as t-butanol and pentanol, medium chain alcohols such as 2-ethylhexanol and 2-ethyl-1,3 hexanediol, long chain alcohols such as isodecanol, isotridecanol, cetyl alcohol, oleyl alcohol, octyldodecanol, liquid C₈ to C₃₂ alcohols e.g. Guerbet alcohols such as Isofol 24; liquid polyols such as glycols and(poly)glycerol; aromatic alcohols such as benzyl alcohol; polycyclic alcohols such as abietyl alcohol;
branched liquid fatty alcohols, particularly Guerbet alcohols e.g. octyldodecanol or isostearyl alcohol (see above) e.g. the isostearyl alcohol available from Croda under the trade mark Prisorine 3515 (HBSP 17.9);
fatty alcohol polyalkoxylates, particularly propoxylates such as the alkoxylates of C₁₂ to C₂₀ fatty, particularly C₁₄, C₁₆ and C₁₈ fatty alcohols which can be linear e.g. as in palmitic and stearic acids, or branched e.g. as in isostearyl alcohol (in practice a product typically derived from dimer acid manufacture which contains a mixture of mainly branched C₁₄ to C₂₂ alcohols averaging about C₁₈), with from 3 to 25 particularly from 7 to 20 alkoxylate alkoxylate, especially ethoxylate, propoxylate or mixtures of ethoxylate and propoxylate, units e.g. the stearyl alcohol 15-polypropoxylate available from Croda under the trade mark Arlamol E (HBSP 20.8);
ester oils particularly those based on C₂ to C₃₀ linear, branched or unsaturated fatty acids and linear, branched or unsaturated fatty alcohols, and typically esters derived from monocarboxylic acid(s) with monohydric alcohol(s); di- or tri-carboxylic acid(s) with monohydric alcohol(s); or di- or poly-hydric alcohol(s) with monocarboxylic acid(s), e.g. the glycerol tris-2-ethylhexanoate ester oil available from Croda under the trade mark Estol 3609 (HBSP 20.4), the isopropyl isostearate oil available from Croda under the trade mark Prisorine 2021 (HBSP 17.7) the methyl oleate oil available from Croda under the trade mark Priolube 1400 (HBSP 17.9), methyl caprylate, alkyl acetate esters, particularly C₆ to C₁₃ alkyl acetates, and especially where the alkyl groups are oxo-alcohol residues, e.g. the ester oils available under the trade mark Exxate from Exxon, synthetic triglyceride esters such as glycerol tri-(C₈ to C₂₄)ates e.g. glycerol tricaprylate such as Estasan 3596, glyceryl trioleate such as Priolube 1435, both available from Croda, and glycerol tri ricinoleate, PEG oleate and isostearate, isopropyl laurate or isostearate, trimethylpropane triesters e.g. with mixed C₈/C₁₀, stearic or oleic acids; natural triglycerides such as rape seed (canola) oil, soya oil, sunflower oil, and fish oil;
methylated natural triglycerides such as methylated rape seed, soya and/or sunflower oils;
aromatic ester oils, particularly esters if benzoic acid and C₈ to C₁₈ monohydric alcohol(s) e.g. the C₁₂ to C₁₅ benzoate oil from Finetex under the trade mark Finsolve TN (HBSP 19.1);
branched liquid fatty alcohols, particularly Guerbet alcohols e.g. octyldodecanol or isostearyl alcohol (see above) e.g. the isostearyl alcohol available from Croda under the trade mark Prisorine 3515 (HBSP 17.9);
branched liquid fatty acids, particularly isostearic acid and dimer acid (dimerised fatty acids, particularly oleic and/or linoleic acids), such as dilinoleic acid (HBSP 17.8);
hydrocarbons including toluene, xylene, and liquid paraffinic materials such as hexane, octane, gasoline, diesel, liquid hydrocarbon waxes, lamp oil, paraffinic oils such as Sunspray 6N, 8N and 11N from Sunoco and Puccini 19P from Q8, (iso)-paraffinic oils such as Isopar V and Exxol D140 from ExxonMobil, and aromatic mineral oils such as the alkyl benzenes available from ExxonMobil under the Solvesso brand; and
miscellaneous liquids such as isophorone (3,3,5-trimethyl-2-cyclohexene-1-one), liquid (at 25°C) fatty acids such as caprylic, isostearic, oleic, and vegetable oil fatty acids, ketones such as methyl ethyl ketone (MEK), aldehydes such as butanal.

Preferably, the oils used include, but are not limited to, petroleum fractions or hydrocarbons such as mineral oil, aromatic solvents, xylene, paraffinic oils, and the like; vegetable oils such as soy bean oil, rape seed oil, olive oil, castor oil, sunflower seed oil, coconut oil, corn oil, cotton seed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like.

The liquids (for convenience referred to generically as 'oils'), particularly as set out above can be used as mixtures of two or more different types of oils.

Of course, as the formulation type is oil based suspensions of active ingredients, it follows that the oil may not be a solvent for the dispersed active, so the choice of oil will complement the desired active(s) in any particular formulation.

It is envisaged that the amount of oil in the concentrate may be determined by the user and set according to the needs of the formulation. A feature of the present invention is the wide range of amounts of oil that can be present in a concentrate and structured. Therefore, the concentrate may comprise oil in the amount in the range from 10 wt.% to 50 wt.% as a percentage of the total emulsion concentrate weight.

Preferably, the amount of oil comprised in the emulsion is in the range from 20 wt.% to 50 wt.%. More preferably, from 30 wt.% to 45 wt.%. Most preferably, 35 wt.% to 40 wt.%.

The emulsion concentrate comprises at least one oil soluble active, and optionally at least one water soluble active. By oil soluble active it should be understood that this includes oil miscible, oil soluble, and oil dispersible actives - i.e. any active capable of being present in oil in some form whether solvated, suspended, or otherwise. The term water soluble will also be similarly understood.

The water soluble actives of the present invention will be understood to be any suitable actives, and are not intended to be particularly restricted to any specific actives. The water actives may therefore be selected from any of those listed below.

The water soluble agrochemical active may preferably be a solid phase agrochemical active. Solid agrochemical active compounds are to be understood in the present invention as meaning all substances customary for plant treatment, whose melting point is above 20°C (at standard pressure). Solid agrochemical actives will also include insoluble active ingredients, i.e. active ingredients whose solubility in water is such that a significant solid content exists in the concentrate after addition.

Water soluble agrochemical actives refer to biocides which, in the context of the present invention, are plant protection agents, more particular chemical substances capable of killing different forms of living organisms used in fields such as medicine, agriculture, forestry, and mosquito control. Also counted under the group of biocides are so-called plant growth regulators.

Biocides for use in agrochemical formulations of the present invention are typically divided into two sub- groups:
▪ pesticides, including fungicides, herbicides, insecticides, algicides, moluscicides, miticides, and rodenticides; and
▪ antimicrobials, including germicides, antibiotics, antibacterials, antivirals, antifungals, antiprotozoals, and antiparasites.

In particular, biocides selected from insecticides, fungicides, or herbicides may be particularly preferred.

The term 'pesticide' will be understood to refer to any substance or mixture of substances intended for preventing, destroying, repelling, or mitigating any pest. A pesticide may be a chemical substance or biological agent (such as a virus or bacteria) used against pests including insects, plant pathogens, weeds, mollusks, birds, mammals, fish, nematodes (roundworms), and microbes that compete with humans for food, destroy property, spread disease or are a nuisance. In the following examples, pesticides suitable for the agrochemical compositions according to the present invention are given.

A fungicide is a chemical control of fungi. Fungicides are chemical compounds used to prevent the spread of fungi in gardens and crops. Fungicides are also used to fight fungal infections. Fungicides can either be contact or systemic. A contact fungicide kills fungi when sprayed on its surface. A systemic fungicide has to be absorbed by the fungus before the fungus dies.

An herbicide is a pesticide used to kill unwanted plants. Selective herbicides kill specific targets while leaving the desired crop relatively unharmed. Some of these act by interfering with the growth of the weed and are often based on plant hormones. Herbicides used to clear waste ground are non-selective and kill all plant material with which they come into contact. Herbicides are widely used in agriculture and in landscape turf management. They are applied in total vegetation control (TVC) programs for maintenance of highways and railroads. Smaller quantities are used in forestry, pasture systems, and management of areas set aside as wildlife habitat.

An insecticide is a pesticide used against insects in all developmental forms, and includes ovicides and larvicides used against the eggs and larvae of insects. Insecticides are used in agriculture, medicine, industry and the household.

Rodenticides are a category of pest control chemicals intended to kill rodents.

Miticides are pesticides that kill mites. Molluscicides are pesticides used to control mollusks, such as moths, slugs and snails.

A nematicide is a type of chemical pesticide used to kill parasitic nematodes (a phylum of worm).

In the following examples, antimicrobials suitable for agrochemical compositions according to the present invention are given.

Bactericidal disinfectants may include those selected from active chlorines, active oxygen, iodine, concentrated alcohols, phenolic substances, cationic surfactants, strong oxidisers, heavy metals and their salts, and concentrated strong acids and alkalis between pH of from 1 to 13. Suitable antiseptics (i.e., germicide agents that can be used on human or animal body, skin, mucoses, wounds and the like) may include diluted chlorine preparations, iodine preparations, peroxides, alcohols with or without antiseptic additives, weak organic acids, phenolic compounds, and cation-active compounds.

The oil soluble actives is selected from spinosad, spinetoram, imidacloprid, propanil, cyproconazole, Diflufenican, acetamiprid, amicarbazone, amidosulfuron, asulam, bentazone, carbaryl, cymoxanil, dicamba, florasulam, myclobutanil, nitrapyrin, picloram, propiconazole, prosulfuron, prothioconazole, pymetrozine, sulfosulfuron, triclopyr, tricyclazole, malathion, and diflufenzopyr.

The concentration of the agrochemical active in the concentrate is not critical for the purposes of the present invention, and may be determined by other factors as required. The concentration of the agrochemical active in the is preferably in the range from 0.5 wt.% to 30 wt.%, more usually from 1 wt.% to 20% wt.%, and desirably from 2.0 wt.% to 10% wt.%, by weight of the concentrate. Most preferably, from 3.0 wt.% to 8.0 wt.%. It will also be understood that if the emulsion concentrate comprises two or more actives (i.e. an oil soluble active and a water soluble active), each active may be present in the amounts as noted above.

Agrochemical concentrates are agrochemical compositions, which may be aqueous or non-aqueous, and which are designed to be diluted with water (or a water based liquid) to form the corresponding end-use agrochemical formulations, typically spray formulations. Said concentrates include those in liquid form (such as solutions, emulsions, or dispersions).

Accordingly, the concentrate of the present invention may be formulated as an emulsion concentrate (EW), and/or suspoemulsions (SE).

The surfactant emulsifier of the present invention will typically be used in an amount proportional to the amount of the oil in the concentrate. The ratio of surfactant emulsifier to oil in the concentrate is preferably at a weight ratio of from about 1:3 to about 1:50. More preferably, from about 1:6 to about 1:25. Most preferably, from about 1:10 to about 1:13. This ratio range will generally be maintained for concentrates and in the agrochemical spray formulations.

The surfactant emulsifiers of the present invention provide for desired stability of the resulting concentrates at various temperatures. The concentrates do not undergo significant separation under storage.

The emulsion concentrates of the present invention, have a maximum separation of 15%, and preferably not more than 10%, at an accelerated test over 14 days at 54°C. Most preferably, the concentrate has no more than 5% separation of an accelerated test over 14 days at 54°C.

The emulsion concentrates of the present invention, have a maximum separation of 15%, and preferably not more than 10%, at an accelerated test over 6 weeks at 54°C. Most preferably, the emulsion has no more than 6% separation for an accelerated test over 6 weeks at 54°C.

The concentrates of the present invention, have a suspensibility of no greater than 2ml for both creaming and sedimentation according to CIPAC MT 180.

It will be appreciated that the emulsion comprises particles of oil and therefore the particle size and distribution is a factor which reflects the stability of the emulsion. It is important that there is a homogeneous distribution of the particles to ensure stability of the emulsion for a longer period. Additionally, an effective emulsifier ensures that the particles do not come together and cause phase separation. Therefore, an emulsion with small particle size and homogeneous particle distribution is likely to be a more stable emulsion.

In the form of a distribution of particle sizes, the particles would have a median volume particle diameter value. It will be understood that the median volume particle diameter refers to the equivalent spherical diameter corresponding to the point on the distribution which divides the population exactly into two equal halves. It is the point which corresponds to 50% of the volume of all the particles, read on the cumulative distribution curve relating volume percentage to the diameter of the particles i.e. 50% of the distribution is above this value and 50% is below. This value is referred to as the "D(v,0.5)" value and is determined as described herein.

Additionally, "D(v,0.9)" and "D(v,0.1)" values can also be referred to, and these values would be the equivalent spherical diameter corresponding to 90% or 10% respectively of the volume of all the particles, read on the cumulative distribution curve relating volume percentage to the diameter of the particles, i.e. they are the points where 10% or 90% of the distribution is above this value and 90% or 10% are below the value respectively.

The particle size values, used to determine the D(v,0.5), D(v,0.1), and D(v,0.9) values, are measured by techniques and methods as described in further detail herein. It will be understood that particle size values defined below are based on emulsions with 3.31 wt.% emulsifier as shown in the Examples.

It is generally known that particle sizes of 1-10 µm are preferred in order to obtain an emulsion having the desired properties.

The particles present in emulsions of the present invention may have an initial D(v,0.5) value at 0 days in the range from 0.7µm to 5.0µm. Preferably, in the range from 1.0 µm to 3.0µm. More preferably, in the range from 1.2µm to 2.0µm. Most preferably, in the range from 1.5µm to 1.9µm.

The particles present in emulsions of the present invention may have a D(v,0.9) value at 0 days in the range from 1.3µm to 6.0µm. Preferably, in the range from 1.8µm to 4.5µm. More preferably, in the range from 2.2µm to 3.6µm. Most preferably, in the range from 2.7µm to 3.0µm.

The particles present in emulsions of the present invention may have a D(v,0.5) value at 2 weeks days and room temperature in the range from 0.7µm to 5.0µm. Preferably, in the range from 1.0µm to 3.0µm. More preferably, in the range from 1.2µm to 2.0µm. Most preferably, in the range from 1.5µm to 1.9µm.

The particles present in emulsions of the present invention may have a D(v,0.9) value at 2 weeks days and room temperature in the range from 1.3µm to 6.0µm. Preferably, in the range from 1.8µm to 4.5µm. More preferably, in the range from 2.2µm to 3.6µm. Most preferably, in the range from 2.6µm to 2.9µm.

The particles present in emulsions of the present invention may have a D(v,0.5) value at 6 weeks days and room temperature in the range from 0.7µm to 5.0µm. Preferably, in the range from 1.0µm to 3.0µm. More preferably, in the range from 1.2µm to 2.0µm. Most preferably, in the range from 1.5µm to 1.9µm.

The particles present in emulsions of the present invention may have a D(v,0.9) value at 6 weeks days and room temperature in the range from 1.3µm to 6.0µm. Preferably, in the range from 1.8µm to 4.5µm. More preferably, in the range from 2.2µm to 3.6µm. Most preferably, in the range from 2.7µm to 3.0µm.

The particles present in the emulsions of the present invention, have a change in any or both of D(v,0.5) and D(v,0.9) between 0 days and 2 weeks when kept at room temperature of no more than 15%, preferably no more than 10%, most preferably no more than 5%.

The particles present in the emulsions of the present invention, have a change in any or both of D(v,0.5) and D(v,0.9) between 0 days and 6 weeks when kept at room temperature of no more than 15%, preferably no more than 10%, most preferably no more than 5%.

The particles present in emulsions of the present invention may have a D(v,0.5) value at 2 weeks days and 54°C in the range from 0.7µm to 5.0µm. Preferably, in the range from 1.0µm to 3.0µm. More preferably, in the range from 1.2µm to 2.0µm. Most preferably, in the range from 1.5µm to 1.9µm.

The particles present in emulsions of the present invention may have a D(v,0.9) value at 2 weeks days and 54°C in the range from 1.3µm to 6.0µm. Preferably, in the range from 1.8µm to 4.5µm. More preferably, in the range from 2.2µm to 3.6µm. Most preferably, in the range from 2.6µm to 2.9µm.

The particles present in emulsions of the present invention may have a D(v,0.5) value at 6 weeks days and 54°C in the range from 0.7µm to 5.0µm. Preferably, in the range from 1.0µm to 3.0µm. More preferably, in the range from 1.2µm to 2.0µm. Most preferably, in the range from 1.5µm to 1.9µm.

The particles present in emulsions of the present invention may have a D(v,0.9) value at 6 weeks days and 54°C in the range from 1.5µm to 6.5µm. Preferably, in the range from 2.0µm to 4.7µm. More preferably, in the range from 2.4µm to 3.8µm. Most preferably, in the range from 2.8µm to 3.0µm.

The particles present in the emulsions of the present invention, have a change in any or both of D(v,0.5) and D(v,0.9) between 0 days and 2 weeks when kept at 54°C of no more than 15%, preferably no more than 10%, most preferably no more than 5%.

The particles present in the emulsions of the present invention, have a change in any or both of D(v,0.5) and D(v,0.9) between 0 days and 6 weeks when kept at 54°C of no more than 15%, preferably no more than 10%, most preferably no more than 5%.

The emulsion of the present invention therefore provides good particle size and particle size distribution in a range desirable for an emulsion concentrate. In addition, the emulsions of the present invention maintain the desired particle sizes and particle size distribution under storage over time.

Agrochemically active compounds require a formulation which allows the active compounds to be taken up by the plant/the target organisms. When concentrates (solid or liquid) are used as the source of active agrochemical and/or adjuvant, the concentrates will typically be diluted to form end-use formulations, typically spray formulations. The dilution may be with water at from 1 to 10,000, particularly 10 to 1,000, times the total weight of the concentrate to form the spray formulation.

Said concentrates may be diluted for use resulting in a dilute composition resulting in an agrochemical active concentration of about 0.5 wt.% to about 1 wt.%. In said dilute composition (for example, a spray formulation, where a spray application rate may be from 10 to 500 I.ha⁻¹) the agrochemical active concentration may be in the range from about 0.001 wt.% to about 1 wt.% of the total formulation as sprayed.

Spray formulations are aqueous agrochemical formulations including all the components which it is desired to apply to the plants or their environment. Spray formulations can be made up by simple dilution of concentrates containing desired components (other than water), or by mixing of the individual components, or a combination of diluting a concentrate and adding further individual components or mixtures of components. Typically such end use mixing is carried out in the tank from which the formulation is sprayed, or alternatively in a holding tank for filling the spray tank. Such mixing and mixtures are typically termed tank mixing and tank mixtures, respectively.

Where the agrochemical active is present in the aqueous end use formulation as solid particles, most usually it will be present as particles mainly of active agrochemical. However, if desired, the active agrochemical can be supported on a solid carrier e.g. silica or diatomaceous earth, which can be a solid support, filler or diluent material.

The spray formulations will typically have a pH within the range from moderately acidic (e.g. about 3) to moderately alkaline (e.g. about 10), and particular near neutral (e.g. about 5 to 8). More concentrated formulations will have similar degrees of acidity/alkalinity, but as they may be largely non-aqueous, pH is not necessarily an appropriate measure of this.

The agrochemical formulation may include solvents (other than water) such as monopropylene glycol, oils which can be vegetable or mineral oils such as spray oils. Such solvents may be included as a solvent for the surfactant adjuvant, and/or as a humectant, e.g. especially propylene glycol. When used such solvents will typically be included in an amount of from 5 wt.% to 500 wt.%, desirably 10 wt.% to 100 wt.%, by weight of the surfactant adjuvant. Such combinations can also include salts such as ammonium chloride and/or sodium benzoate, and/or urea especially as gel inhibition aids. Additional surfactants may be included in the emulsion concentrate or agrochemical formulation in particular but not exclusively to aid dispersion of the active in the oil. It is desirable to use said surfactants that are either soluble or dispersible in the oil and thus the choice of surfactant in any particular case will depend on the oil used.

Such additional surfactants which may be included to aid dispersion of the active in the oil include polymeric dispersants such as those available from Croda, including polyhydroxyester, particularly poly(hydroxystearic) acid such as Atlox LP-1; ABA polyhydroxyester-PEG-polyhydroxyester copolymers such as Hypermer B-246 and Zephrym PD 2206; polyamine modified polyesters such as Atlox LP-6; and alkyd type copolyesters such as Atlox 4914. With such dispersant surfactants, the amount included in an agrochemical formulation will typically be from 1 wt.% to 25 wt.%, more usually from 2.5 wt.% to 15 wt.%, and desirably from 2.5 wt.% to 12.5 wt.% of the total formulation.

Additional surfactants may be included in the emulsion concentrate or agrochemical formulation to incorporate emulsifier to promote ready emulsification of the oil flowable on dilution with water prior to spraying. Such surfactants which may be included as emulsifiers to promote ready emulsification of the oil flowable on dilution with water prior to spraying include anionic surfactants particularly sulphonated hydrocarbon surfactants e.g. alkylbenzene sulphonates, particularly as salts such as alkaline earth metal e.g. calcium, salts particularly calcium didodecylbenzene sulphonate; and non-ionic surfactants including block copolymer polyalkoxylates such as those sold under the tradename Synperonic PE; alkoxylated, particularly ethoxylated fatty alcohols such as those sold under the tradenames Synperonic A and Synperonic 13; sorbitan esters such as those sold under the tradename Span; ethoxylated sorbitan esters such as those sold under the tradename Tween; and ethoxylated sorbitol esters such as POE(40) sorbitol septaoleate such as that sold under the tradename Arlatone T(V) or POE (50) sorbitol hexaoleate such as that sold under the tradename Atlas G-1096 both from Croda.

With such additional surfactants, the amount included in an agrochemical formulation will typically be from 1 wt.% to 25 wt.%, more usually from 2.5 wt.% to 15 wt.%, and desirably from 2.5 wt.% to 12.5 wt.% of the total formulation.

Different types of oils may require different types of surfactant. Thus, for agrochemical formulations based on oils as follows (illustrated with surfactants commercially available from Croda):
triglyceride oils - combinations of non-ionic surfactants such as esters of ethoxylated polyols e.g. POE (50) sorbitol hexaoleate (Atlas G-1096) or POE(40) sorbitol septaoleate (Arlatone T(V)), alkyd type copolyesters (Atlox 4914) and anionic surfactants such as alkyl aryl sulphonates usually in salt form such as amine e.g. the isopropylamine alkyl aryl sulphonate Zephrim 330B; commonly in further in combination with polymeric surfactants such as Atlox polymeric surfactants, or block copolymeric alkoxylates such as Atlas G-5000;
methylated oils - typically use combinations of anionic surfactants such as alkyl aryl sulphonates usually in salt form such as alkali or alkali earth metal salts e.g. the calcium alkyl aryl sulphonate Atlox 4838B (dissolved in ethylhexanol), in combination with a non ionic surfactant such as a fatty alcohol ethoxylates such as C₁₂₋₁₅ 3 to 20 ethoxylates e.g. Synperonic series especially A3, A7, A11, A20, or block copolymeric alkoxylates such as Atlas G-5000;
ester oils such as lower alkyl, particularly methyl esters e.g. methyl oleate, - typically use combinations of non-ionic surfactants, particularly alcohol ethoxylates usually having relatively high HLB values e.g. Synperonic A20, and block copolymeric alkoxylate, with anionic surfactants such as alkyl aryl sulphonates, particularly linear alkyl benzene sulphonates such as dodecyl benzene sulphonate, especially as calcium salts; mineral oils - combinations of non-ionic surfactants, particularly polyol esters such as sorbitan esters e.g. Span series sorbitan esters particularly Span 80 sorbitan oleate, ethoxylated sorbitan esters e.g. Tween series ethoxylated sorbitan esters particularly Tween 85 POE 20 sorbitan trioleate, and alkyl alkyl sulphonates such as Zephrim 330B;
isoparaffinic oils - esters of ethoxylated polyols e.g. POE (40) sorbitol hexaoleate such as Atlas G-1086 or POE (50) sorbitol hexaoleate such as Atlas G-1096, or block copolymeric alkoxylates, usually in combination with anionic surfactants such as alkyl aryl sulphonates e.g. Atlox 4838B.
aromatic base oils - typically use combinations of non-ionic surfactants, particularly alcohol ethoxylates usually having relatively high HLB values e.g. Synperonic A20, and block copolymeric alkoxylates with anionic surfactants such as alkyl aryl sulphonates, particularly linear alkyl benzene sulphonates such as dodecyl benzene sulphonate, especially as calcium salts.

The concentrate and/or agrochemical formulation may also include other components as desired. These other components may be selected from those including:
▪ binders, particularly binders which are readily water soluble to give low viscosity solutions at high binder concentrations, such as polyvinylpyrrolidone; polyvinyl alcohol; carboxymethyl cellulose; gum arabic; sugars e.g. sucrose or sorbitol; starch; ethylene-vinyl acetate copolymers, sucrose and alginates,
▪ diluents, absorbents or carriers such as carbon black; talc; diatomaceous earth; kaolin; aluminium, calcium or magnesium stearate; sodium tripolyphosphate; sodium tetraborate; sodium sulphate; sodium, aluminium and mixed sodium-aluminium silicates; and sodium benzoate,
▪ disintegration agents, such as surfactants, materials that swell in water, for example carboxy methylcellulose, collodion, polyvinylpyrrolidone and microcrystalline cellulose swelling agents; salts such as sodium or potassium acetate, sodium carbonate, bicarbonate or sesquicarbonate, ammonium sulphate and dipotassium hydrogen phosphate;
▪ wetting agents such as alcohol ethoxylate and alcohol ethoxylate/propoxylate wetting agents;
▪ dispersants such as sulphonated naphthalene formaldehyde condensates and acrylic copolymers such as the comb copolymer having capped polyethylene glycol side chains on a polyacrylic backbone;
▪ emulsifiers such as alcohol ethoxylates, ABA block co polymers, or castor oil ethoxylates;
▪ antifoam agents, e.g. polysiloxane antifoam agents, typically in amounts of 0.005 wt.% to 10 wt.% of the formulation;
▪ viscosity modifiers such as commercially available water soluble or miscible gums, e.g. xanthan gums, and/or cellulosics, e.g. carboxy- methyl, ethyl or propylcellulose; and/or
▪ preservatives and/or anti-microbials such as organic acids, or their esters or salts such as ascorbic e.g. ascorbyl palmitate, sorbic e.g. potassium sorbate, benzoic e.g. benzoic acid and methyl and propyl 4-hydroxybenzoate, propionic e.g. sodium propionate, phenol e.g. sodium 2-phenylphenate; 1,2-benzisothiazolin-3-one; or formaldehyde as such or as paraformaldehyde; or inorganic materials such as sulphurous acid and its salts, typically in amounts of 0.01 wt.% to 1 wt.% of the formulation.

The invention further includes a method of treating plants using agrochemical formulations formed from the emulsifier concentrate. These may formed by dilution of the concentrate of the first aspect.

Accordingly the invention further includes methods of use including a method of killing or inhibiting vegetation or pests by applying to the vegetation, or the immediate environment of the vegetation e.g. the soil around the vegetation, a spray formulation formed from the emulsifier concentrate of the first aspect.

All of the features described herein may be combined with any of the above aspects, in any combination.

In order that the present invention may be more readily understood, reference will now be made, by way of example, to the following description.

It will be understood that all tests and physical properties listed have been determined at atmospheric pressure and room temperature (i.e. 25°C), unless otherwise stated herein, or unless otherwise stated in the referenced test methods and procedures.

### Examples - Forming Emulsion Concentrate

Diflufenican is a herbicide and was obtained from Nutrichem. It was processed from a starting particle size of ~600 microns. It was passed through a Jet Pulveriser Air Mill two times, with each pass reducing the particle size. A final particle size of 9 microns was achieved and the formulations were made using Diflufenican as specified below:
D(v,0.1) - 1.091, D(v,0.5) - 3.798, D(v,0.9) - 8.613

### Example 1 - Preparation of Emulsifier A

PEG-50 sorbitol (453g, 31.2 wt.%) and poly-12-hydroxystearic acid (997g, 68.8 wt.%) were charged in to a stainless steel reaction vessel. The mixture was heated to 210-220°C under nitrogen spare and agitation. The reaction was held for 4-5 hours. The reaction was then cooled to 70-80°C with the product (Emulsifier A) discharged.

### Emulsion

An example emulsion concentrate was prepared with the following formulation:
Dilflufenican - 5.0% wt/wt
Emulsifier A - 3.31% wt/wt
Atlas G-5000 - 3.31% wt/wt
Methyl Soyate - 37.5% wt/wt
Propylene Glycol - 5.0% wt/wt
Water - 45.88% wt/wt

The emulsion concentrate was prepared as follows:
- Atlas G-5000 (warmed to 54°C overnight) was added to deionised water and propylene glycol. This was placed on a stir plate and allowed to homogenise.
- The warmed (54°C) oil phase surfactant was added to stirring methyl soyate that was warmed in the microwave, this was allowed to homogenise.
- Milled Diflufenican was added to the water phase and stirred for 60 seconds.
- The oil phase was slowly added to the stirring water phase over 60-90 seconds, and allowed to stir for an additional 60 seconds.
- The course emulsion was placed on a Silverson for 30 seconds at 10,000rpm, and a sample was immediately run for the zero time particle size measurement.

### Results

Data was collected in two separate categories for the emulsion concentrate. Particle Size Distribution and Visual Stability were tested for the sample when stored for various time periods and under different temperature conditions.

The sample emulsion was tested as soon as made (Initial). Also the sample emulsion was tested after 2 weeks and after 6 weeks storage at room temperature, and at 54°C.

It should be noted that testing at elevated temperature was performed as it is generally understood to represent an accelerated way of assessing room temperature properties over time. For example, a concentrate kept at 54°C for 14 days is understood to provide similar results compared to keeping a concentrate at room temperature for two years. Also, testing storage stability at elevated temperatures is useful for determining stability if the concentrate is sold and stored in typically warm and hot countries.

### Visual Stability

The visual stability results for the example formulation are listed below:
▪ 2 weeks at RT - small amount of flocculation noted on top, easily re-suspended after three inversions.
▪ 6 weeks at RT - small amount of flocculation noted on top, easily re-suspended after one inversion for the oil and a few more for anything else.
▪ 2 weeks at 54°C - slight oil layer on top, easily re-suspended after five inversions.
▪ 6 weeks at 54°C - small amount of flocculation noted on top, mostly re-suspended after three inversions, and more vigorous shaking re-suspends everything.

From the results it can be seen that the emulsion concentrate exhibited good characteristics in regard to oil and sediment layers being present. It should be noted that sedimentation layers are to be expected since these emulsion concentrate contain no structuring agent, this was done to highlight the surfactant differences.

### Particle Size Distribution

A measure of the stability and therefore effectiveness of the emulsifier is Particle Size Distribution Data (PSD). The PSD is ideally in a desired range when the emulsion concentrate is formed, and also has little change in PSD over time. Significant changes in PSD over time would indicate a decreasing level of stability, with possible agglomeration of the particles and separation.

The PSD is shown below in Table 1.

**Table 1. - Particle size data**

| **Conditions** | **Emulsion Concentrate** | |
|---|---|---|
| | **D(v,0.5) µm** | **D(v,0.9) µm** |
| 0 days* | 1.738 | 2.808 |
| 2 weeks at RT | 1.708 | 2.713 |
| 6 weeks at RT | 1.698 | 2.791 |
| 2 weeks at 54°C | 1.725 | 2.794 |
| 6 weeks at 54°C | 1.745 | 2.902 |

| | | |
|---|---|---|
| * after formulation | | |

These results therefore show particle sizes which are acceptable on formation of the emulsion. Also, the storage stability is indicated by any change in particle size over time, with significant changes indicating a lack of stability. The changes in PSD values shown in Table 1 are shown below.

### At RT

Change in D(v,0.5) over 2 weeks -1.7%
Change in D(v,0.5) over 6 weeks -2.3%
Change in D(v,0.9) over 2 weeks -3.4%
Change in D(v,0.9) over 6 weeks -0.61%

### At 54°C

Change in D(v,0.5) over 2 weeks -0.75%
Change in D(v,0.5) over 6 weeks 0.40%
Change in D(v,0.9) over 2 weeks -0.50%
Change in D(v,0.9) over 6 weeks 3.3%

The emulsion concentrate with Emulsifier A showed stable particle size over time during storage, and therefore a high degree of stability with little increase in large particles or aggregation leading to separation. This was both the case for storage at room temperature, and also at elevated temperature. Storage stability at elevated temperatures is clearly a desirable property for emulsion concentrates which are intended to be sold in to countries having hot climates.

### Dilution Stability

The emulsion concentrate was tested at 1% dilution rate in 342ppm water. Dilution stability is relevant to end use of the emulsion when the user would dilute the concentrate just prior to spraying on to a field. Therefore, the timescale of required stability when diluted is more of the order of hours - this compares to storage stability where stability over weeks and months is more relevant.

Visual stability observations were made to the diluted emulsion concentrate at various time points over 24 hours, and both at room temperature and 54°C. The results are shown below.

RT - remained a milky white emulsion at 0hrs, 0.5hrs, 2hrs, 4hrs, 8hrs, and 24 hrs 54°C - remained a milky white emulsion at 0hrs, 0.5hrs, 2hrs, 4hrs, 8hrs, slight creaming at 24hrs

Visual observations showed a good performance for dilution stability for the emulsion concentrate when diluted. The diluted concentrate remains stable throughout a long enough period to cover normal use.

## Claims

1. An agrochemical oil-in-water emulsion concentrate comprising;
i) a discrete oil phase comprising at least one agrochemical oil soluble active;
ii) a continuous water phase, optionally comprising at least one agrochemical water soluble active;
iii) a surfactant emulsifier being an alkoxylated polyol which is optionally acyl terminated, and having a general structure (I):
R¹. [(AO)ₙ-R²]ₘ (I)
wherein
R¹ is the residue of a monosaccharide selected from glucose, fructose or sorbitol, a disaccharide such as maltose, palitose, lactitol or lactose, or a higher oligosaccharide, each having m active hydrogen atoms, where m is an integer in the range from 4 to 10;
AO is an oxyalkylene group;
each n independently represents an integer in the range from 1 to 100;
each R² is independently represents hydrogen, or an acyl group represented by - C(O)R³ wherein each R³ independently represents a residue of polyhydroxyalkyl carboxylic acid, polyhydroxyalkenyl carboxylic acid, hydroxyalkyl carboxylic acid, hydroxyalkenyl carboxylic acid, oligomer of hydroxyalkyl carboxylic acid, or oligomer of hydroxyalkenyl carboxylic acid; and
wherein on average at least two R² groups per molecule are alkanoyl groups as defined; and
iv) a HLB co-surfactant having a HLB greater than 10 and comprises a polyalkylene glycol ether;
wherein said oil soluble active is selected from spinosad, spinetoram, imidacloprid, propanil, cyproconazole, Diflufenican, acetamiprid, amicarbazone, amidosulfuron, asulam, bentazone, carbaryl, cymoxanil, dicamba, florasulam, myclobutanil, nitrapyrin, picloram, propiconazole, prosulfuron, prothioconazole, pymetrozine, sulfosulfuron, triclopyr, tricyclazole, malathion, and diflufenzopyr.

2. The concentrate according to any preceding claim, wherein the R³ hydroxylalkyl and hydroxyalkenyl carboxylic acids are of formula HO-X-COOH where X is a divalent saturated or unsaturated, aliphatic radical containing from 11 to 17 carbons, and in which there are at least 4 carbon atoms directly between the hydroxyl and carboxylic acid groups.

3. The concentrate according to any preceding claim, wherein the oxyalkylene group AO is oxyethylene, oxypropylene, or a combination thereof, and forms an oxyalkylene chain.

4. The concentrate according to claim 3, wherein the number of alkylene oxide residues in the (poly)alkylene oxide chains (n) is in the range from 2 to 50.

5. The concentrate according to any preceding claim, wherein said surfactant emulsifier is a liquid with a molecular weight ranging from 3,000 to 8,000.

6. The concentrate according to any preceding claim, wherein the ratio of surfactant emulsifier to oil in the concentrate is at a weight ratio of from about 1:3 to about 1:50.

7. A method of preparing an emulsion concentrate according to any preceding claim, said method comprising mixing
oil comprising at least one agrochemical oil soluble active;
water comprising optionally at least one agrochemical water soluble active;
a surfactant emulsifier being an alkoxylated polyol which is
optionally acyl terminated, and having a general structure (I):
R¹. [(AO)ₙ-R²]ₘ (I)
wherein
R¹ is the residue of a monosaccharide selected from glucose, fructose or sorbitol, a disaccharide such as maltose, palitose, lactitol or lactose, or a higher oligosaccharide, each having m active hydrogen atoms, where m is an integer in the range from 4 to 10;
AO is an oxyalkylene group;
each n independently represents an integer in the range from 1 to 100;
each R² is independently represents hydrogen, or an acyl group represented by - C(O)R³ wherein each R³ independently represents a residue of polyhydroxyalkyl carboxylic acid, polyhydroxyalkenyl carboxylic acid, hydroxyalkyl carboxylic acid, hydroxyalkenyl carboxylic acid, oligomer of hydroxyalkyl carboxylic acid, or oligomer of hydroxyalkenyl carboxylic acid; and
wherein on average at least two R² groups per molecule are alkanoyl groups as defined; and
a HLB co-surfactant having a HLB greater than 10 and comprises a polyalkylene glycol ether;
wherein said oil soluble active is selected from spinosad, spinetoram, imidacloprid, propanil, cyproconazole, Diflufenican, acetamiprid, amicarbazone, amidosulfuron, asulam, bentazone, carbaryl, cymoxanil, dicamba, florasulam, myclobutanil, nitrapyrin, picloram, propiconazole, prosulfuron, prothioconazole, pymetrozine, sulfosulfuron, triclopyr, tricyclazole, malathion, and diflufenzopyr.

8. An agrochemical formulation formed by dilution of the agrochemical oil-in-water emulsion concentrate according to any of claims 1 to 6, or as formed in accordance with the method of claim 7.

9. A method of treating vegetation to control pests, the method comprising applying an agrochemical formulation in accordance with claim 8, either to said vegetation or to the immediate environment of said vegetation.

## Patentansprüche

1. Agrochemisches Öl-in-Wasser-Emulsionskonzentrat, umfassend;
i) eine diskrete Ölphase, die mindestens einen agrochemischen öllöslichen Wirkstoff umfasst;
ii) eine kontinuierliche Wasserphase, die gegebenenfalls mindestens einen agrochemischen wasserlöslichen Wirkstoff umfasst;
iii) einen Tensidemulgator, bei dem es sich um ein alkoxyliertes Polyol handelt, das gegebenenfalls acylterminiert ist und eine allgemeine Struktur (I) aufweist:
R¹. [(AO)ₙ - R²]ₘ (I)
wobei
R¹ für den Rest eines Monosaccharids, ausgewählt aus Glucose, Fructose oder Sorbit, eines Disaccharids, wie Maltose, Palatinose, Lactitol oder Lactose, oder eines höheren Oligosaccharids, jeweils mit m aktiven Wasserstoffatomen, steht, wobei m für eine ganze Zahl im Bereich von 4 bis 10 steht;
AO für eine Oxyalkylengruppe steht;
n jeweils unabhängig für eine ganze Zahl im Bereich von 1 bis 100 steht;
R² jeweils unabhängig für Wasserstoff oder eine durch - C(O)R³ wiedergegebene Acylgruppe steht, wobei R³ jeweils unabhängig für einen Rest von Polyhydroxyalkylcarbonsäure,
Polyhydroxyalkenylcarbonsäure, Hydroxyalkylcarbonsäure, Hydroxyalkenylcarbonsäure, eines Oligomers von Hydroxyalkylcarbonsäure oder eines Oligomers von Hydroxyalkenylcarbonsäure steht; und
wobei durchschnittlich mindestens zwei R²-Gruppen pro Molekül wie oben definierte Alkanoylgruppen sind; und
iv) ein HLB-Cotensid mit einem HLB-Wert größer als 10, das einen Polyalkylenglykolether umfasst;
wobei der öllösliche Wirkstoff aus Spinosad, Spinetoram, Imidacloprid, Propanil, Cyproconazol, Diflufenican, Acetamiprid, Amicarbazon, Amidosulfuron, Asulam, Bentazon, Carbaryl, Cymoxanil, Dicamba, Florasulam, Myclobutanil, Nitrapyrin, Picloram, Propiconazol, Prosulfuron, Prothioconazol, Pymetrozin, Sulfosulfuron, Triclopyr, Tricyclazol, Malathion und Diflufenzopyr ausgewählt ist.

2. Konzentrat nach einem der vorhergehenden Ansprüche, wobei die R³-Hydroxylalkyl- und Hydroxyalkenylcarbonsäuren die Formel HO-X-COOH aufweisen, wobei X für einen zweiwertigen gesättigten oder ungesättigten aliphatischen Rest mit 11 bis 17 Kohlenstoffatomen steht und wobei sich direkt zwischen den Hydroxyl- und Carbonsäuregruppen mindestens 4 Kohlenstoffatome befinden.

3. Konzentrat nach einem der vorhergehenden Ansprüche, wobei die Oxyalkylengruppe AO Oxyethylen, Oxypropylen oder eine Kombination davon ist und eine Oxyalkylenkette bildet.

4. Konzentrat nach Anspruch 3, wobei die Anzahl der Alkylenoxidreste in den (Poly)alkylenoxidketten (n) im Bereich von 2 bis 50 liegt.

5. Konzentrat nach einem der vorhergehenden Ansprüche, wobei der Tensidemulgator eine Flüssigkeit mit einem Molekulargewicht im Bereich von 3.000 bis 8.000 ist.

6. Konzentrat nach einem der vorhergehenden Ansprüche, wobei das Verhältnis von Tensidemulgator zu Öl in dem Konzentrat in einem Gewichtsverhältnis von etwa 1:3 bis etwa 1:50 liegt.

7. Verfahren zur Herstellung eines Emulsionskonzentrats nach einem der vorhergehenden Ansprüche, wobei das Verfahren das Mischen von Folgendem umfasst:
Öl, das mindestens einen agrochemischen öllöslichen Wirkstoff umfasst;
Wasser, das gegebenenfalls mindestens einen agrochemischen wasserlöslichen Wirkstoff umfasst;
einem Tensidemulgator, bei dem es sich um ein alkoxyliertes Polyol handelt, das
gegebenenfalls acylterminiert ist und eine allgemeine Struktur (I) aufweist:
R¹. [(AO)ₙ - R²]ₘ (I)
wobei
R¹ für den Rest eines Monosaccharids, ausgewählt aus Glucose, Fructose oder Sorbit, eines Disaccharids, wie Maltose, Palatinose, Lactitol oder Lactose, oder eines höheren Oligosaccharids, jeweils mit m aktiven Wasserstoffatomen, steht, wobei m für eine ganze Zahl im Bereich von 4 bis 10 steht;
AO für eine Oxyalkylengruppe steht;
n jeweils unabhängig für eine ganze Zahl im Bereich von 1 bis 100 steht;
R² jeweils unabhängig für Wasserstoff oder eine durch - C(O)R³ wiedergegebene Acylgruppe steht, wobei R³ jeweils unabhängig für einen Rest von Polyhydroxyalkylcarbonsäure,
Polyhydroxyalkenylcarbonsäure, Hydroxyalkylcarbonsäure, Hydroxyalkenylcarbonsäure, eines Oligomers von Hydroxyalkylcarbonsäure oder eines Oligomers von Hydroxyalkenylcarbonsäure steht; und
wobei durchschnittlich mindestens zwei R²-Gruppen pro Molekül wie oben definierte Alkanoylgruppen sind; und
einem HLB-Cotensid mit einem HLB-Wert größer als 10, das einen Polyalkylenglykolether umfasst;
wobei der öllösliche Wirkstoff aus Spinosad, Spinetoram, Imidacloprid, Propanil, Cyproconazol, Diflufenican, Acetamiprid, Amicarbazon, Amidosulfuron, Asulam, Bentazon, Carbaryl, Cymoxanil, Dicamba, Florasulam, Myclobutanil, Nitrapyrin, Picloram, Propiconazol, Prosulfuron, Prothioconazol, Pymetrozin, Sulfosulfuron, Triclopyr, Tricyclazol, Malathion und Diflufenzopyr ausgewählt ist.

8. Agrochemische Formulierung, die durch Verdünnen des agrochemischen Öl-in-Wasser-Emulsionskonzentrats nach einem der Ansprüche 1 bis 6 gebildet wird, oder wie gemäß dem Verfahren nach Anspruch 7 gebildet.

9. Verfahren zur Behandlung von Vegetation zur Bekämpfung von Schädlingen, wobei das Verfahren das Aufbringen einer agrochemischen Formulierung nach Anspruch 8 entweder auf den Pflanzenwuchs oder auf die unmittelbare Umgebung des Pflanzenwuchses umfasst.

## Revendications

1. Concentré agrochimique d'émulsion d'huile dans l'eau comprenant :
i) une phase huileuse discrète comprenant au moins un principe actif agrochimique oléosoluble ;
ii) une phase aqueuse continue, comprenant éventuellement au moins un principe actif agrochimique hydrosoluble ;
iii) un émulsifiant tensioactif qui est un polyol alcoxylé qui est éventuellement à terminaison acyle et ayant une structure générale (I) :
R¹. [(AO)ₙ - R²]ₘ (I)
R¹ étant le résidu d'un monosaccharide choisi parmi le glucose, le fructose ou le sorbitol, d'un disaccharide tel que le maltose, le Palatinose, le lactitol ou le lactose ou d'un oligosaccharide supérieur, ayant chacun m atomes d'hydrogène actifs, m étant un nombre entier dans la plage allant de 4 à 10 ;
AO étant un groupe oxyalkylène ;
chaque n représentant indépendamment un nombre entier dans la plage allant de 1 à 100 ;
chaque R² représentant indépendamment l'atome d'hydrogène ou un groupe acyle représenté par -C(O)R³, chaque R³ représentant indépendamment un résidu d'acide polyhydroxyalkylcarboxylique, d'acide polyhydroxyalcénylcarboxylique, d'acide hydroxyalkylcarboxylique, d'acide hydroxyalcénylcarboxylique, d'oligomère d'acide hydroxyalkylcarboxylique ou d'oligomère d'acide hydroxyalcénylcarboxylique ; et
en moyenne au moins deux groupes R² par molécule étant des groupes alcanoyle tels que définis ; et
iv) un co-tensioactif HLB ayant un HLB supérieur à 10 et qui comprend un éther de polyalkylèneglycol ;
ledit principe actif oléosoluble étant choisi parmi le spinosad, le spinétorame, l'imidaclopride, le propanil, le cyproconazole, le diflufénican, l'acétamipride, l'amicarbazone, l'amidosulfuron, l'asulame, la bentazone, le carbaryl, le cymoxanil, le dicamba, le florasulame, le myclobutanil, la nitrapyrine, le piclorame, le propiconazole, le prosulfuron, le prothioconazole, la pymétrozine, le sulfosulfuron, le triclopyr, le tricyclazole, le malathion et le diflufenzopyr.

2. Concentré selon une quelconque revendication précédente, les acides hydroxyalkylcarboxyliques et hydroxyalcénylcarboxyliques R³ répondant à la formule HO-X-COOH, X étant un radical aliphatique divalent saturé ou insaturé contenant de 11 à 17 atomes de carbone et dans lesquels il y a au moins 4 atomes de carbone directement entre les groupes hydroxyle et acide carboxylique.

3. Concentré selon une quelconque revendication précédente, le groupe oxyalkylène AO étant un groupe oxyéthylène, oxypropylène ou une combinaison de ceux-ci et formant une chaîne oxyalkylène.

4. Concentré selon la revendication 3, le nombre de résidus d'oxyde d'alkylène dans les chaînes de (poly)oxyde d'alkylène (n) étant dans la plage allant de 2 à 50.

5. Concentré selon une quelconque revendication précédente, ledit émulsifiant tensioactif étant un liquide présentant une masse moléculaire allant de 3 000 à 8 000.

6. Concentré selon une quelconque revendication précédente, le rapport de l'émulsifiant tensioactif à l'huile dans le concentré étant à un rapport pondéral allant d'environ 1:3 à environ 1:50.

7. Procédé de préparation d'un concentré d'émulsion selon une quelconque revendication précédente, ledit procédé comprenant le mélange
d'huile comprenant au moins un principe actif agrochimique oléosoluble ;
d'eau comprenant éventuellement au moins un principe actif agrochimique hydrosoluble ;
d'un émulsifiant tensioactif qui est un polyol alcoxylé qui est
éventuellement à terminaison acyle et ayant une structure générale (I) :
R¹. [(AO)ₙ - R²]ₘ (I)
R¹ étant le résidu d'un monosaccharide choisi parmi le glucose, le fructose ou le sorbitol, d'un disaccharide tel que le maltose, le Palatinose, le lactitol ou le lactose ou d'un oligosaccharide supérieur, ayant chacun m atomes d'hydrogène actifs, m étant un nombre entier dans la plage allant de 4 à 10 ;
AO étant un groupe oxyalkylène ;
chaque n représentant indépendamment un nombre entier dans la plage allant de 1 à 100 ;
chaque R² représentant indépendamment l'atome d'hydrogène ou un groupe acyle représenté par -C(O)R³, chaque R³ représentant indépendamment un résidu d'acide polyhydroxyalkylcarboxylique, d'acide polyhydroxyalcénylcarboxylique, d'acide hydroxyalkylcarboxylique, d'acide hydroxyalcénylcarboxylique, d'oligomère d'acide hydroxyalkylcarboxylique ou d'oligomère d'acide hydroxyalcénylcarboxylique ; et
en moyenne au moins deux groupes R² par molécule étant des groupes alcanoyle tels que définis ; et
d'un co-tensioactif HLB ayant un HLB supérieur à 10 et qui comprend un éther de polyalkylèneglycol ;
ledit principe actif oléosoluble étant choisi parmi le spinosad, le spinétorame, l'imidaclopride, le propanil, le cyproconazole, le diflufénican, l'acétamipride, l'amicarbazone, l'amidosulfuron, l'asulame, la bentazone, le carbaryl, le cymoxanil, le dicamba, le florasulame, le myclobutanil, la nitrapyrine, le piclorame, le propiconazole, le prosulfuron, le prothioconazole, la pymétrozine, le sulfosulfuron, le triclopyr, le tricyclazole, le malathion et le diflufenzopyr.

8. Formulation agrochimique formée par dilution du concentré agrochimique d'émulsion d'huile dans l'eau selon l'une quelconque des revendications 1 à 6 ou tel que formé selon le procédé de la revendication 7.

9. Procédé de traitement de végétation pour lutter contre des organismes nuisibles, le procédé comprenant l'application d'une formulation agrochimique selon la revendication 8, soit sur ladite végétation, soit à l'environnement immédiat de ladite végétation.
